# EUROPÄISCHE PATENTSCHRIFT

(11) **EP 1 956 345 B1**
(45) Veröffentlichungstag und Bekanntmachung des Hinweises auf die Patenterteilung: **08.01.2014**
(21) Anmeldenummer: 08033504.5
(22) Anmeldetag: 12.01.2008
(51) Int. Cl.: G01D 9/00, G01F 15/06, G01P 3/483

(54) **Modul zur kapazitiven Abtastung und Verbrauchszähler**
Module for capacitative mapping and usage meter
Module de balayage capacitif et compteur de consommation

(30) Priorität: 10.02.2007 DE 102007006607
(43) Veröffentlichungstag der Anmeldung: 13.08.2008
(73) Patentinhaber: Techem Energy Services GmbH, 65760 Eschborn (DE)
(72) Erfinder: Gutmann, Norbert, 64295 Darmstadt (DE)
(74) Vertreter: KEIL & SCHAAFHAUSEN Patentanwälte

(56) Entgegenhaltungen:
- DE-A1- 10 027 647

## Beschreibung

Die Erfindung betrifft ein Modul zur kapazitiven Abtastung eines Verbrauchszählers sowie einen mit diesem Modul ausgestatteten Verbrauchszähler, welcher verbrauchsabhängig eine kapazitiv detektier- bzw. abtastbare Messgröße verändert. Der Verbrauchszähler kann insbesondere ein Wasserzähler mit einer rotierenden Scheibe sein, welche abschnittsweise verschiedene kapazitive Eigenschaften aufweist. Das Modul weist ein an dem Verbrauchzähler festlegbares Modulgehäuse und eine kapazitive Sensorfläche zur Detektion der kapazitiven Messgröße auf. Dazu ist die Sensorfläche mit einer in dem Modulgehäuse aufgenommenen Messelektronik verbunden.

Ein derartiger Verbrauchszähler kann ein Wasserzähler mit einem Rollenzählwerk und einer mit dem Getriebe des Rollenzählwerkes verbundenen, halbseitig metallisch beschichteten Scheibe sein, welche abhängig von ihrer Stellung an einem Messpunkt verschiedene kapazitive Eigenschaften aufweist. Um diese zu detektieren, kann ein Modul, beispielsweise ein elektronisches Funkmodul, in einem eigenen Gehäuse vorgesehen sein, welches auch nachträglich an dem Verbrauchszähler festgelegt werden kann. Bekannte Funkmodule besitzen dazu einige mit Kupfer kaschierte Flächen, die zusammen mit der Rotorscheibe in dem mechanischen Verbrauchs- bzw. Wasserzähler einen Kondensator bilden. Je nach Stellung der Rotorscheibe ändert sich der resultierende Kondensator und damit die kapazitiv detektierbare Messgröße. So ist eine Umdrehungsdetektion als verbrauchsabhängige Messgröße möglich.

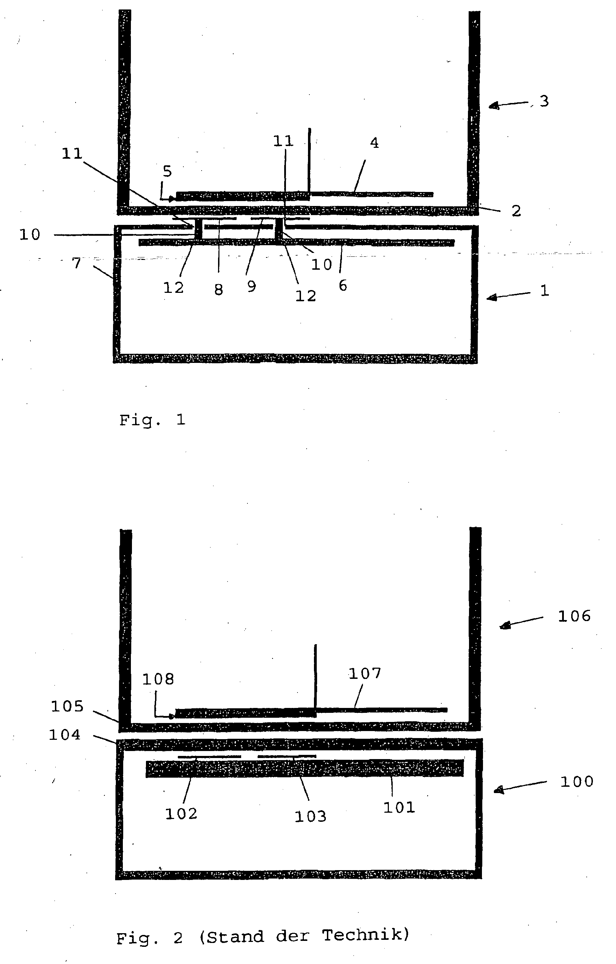

Bei den derzeit bekannten Anordnungen besteht das Problem, dass die durch die Rotation der Scheibe mit abschnittsweise unterschiedlichen kapazitiven Eigenschaften induzierten Änderungen der Kapazität in dem resultierenden Kondensator so klein sind, dass bei der Messung Störungen auftreten können. Dies liegt zum einen darin, dass zwischen der rotierenden Scheibe und der Sensorfläche sowohl eine Wand des Wasserzählers als auch eine Wand des Modulgehäuses liegen, welche unter Umständen die Kapazität des Kondensators maßgeblich mit beeinflussen. Häufig sind in dem Modul mehrere benachbart angeordnete Sensorflächen vorgesehen, welche auch in dieser benachbarten Anordnung bereits kapazitiv miteinander verkoppelt sind. Bei einer in Fig. 2 dargestellten, in der Praxis häufig verwendeten Anordnung der kapazitiven Sensorflächen in einem Modul zur kapazitiven Abtastung mit einem großen Abstand zwischen der rotierenden Scheibe des Verbrauchszählers und den Sensorflächen ist die durch die rotierende Scheibe hervorgerufene Änderung in der kapazitiven Kopplung dann so klein, dass sie schwierig nachzuweisen ist. Dies führt zu einer grundsätzlich störanfälligen Auswertung der kapazitiven Abtastung.

In der DE 100 27 647 B4 ist eine Anordnung zum Detektieren einer Rotation eines innerhalb eines geschlossenen ersten Messgerätegehäuses nahe der Gehäusewand angeordneten Drehelements mit einer elektrisch leitenden Teilfläche beschrieben, welche mit zwei an eine Auswerteeinheit angeschlossenen Sensorflächen eine in Abhängigkeit von der Drehstellung des Drehelements veränderliche kapazitive Anordnung bildet. Die beiden Sensorflächen sind auf der Außenseite der Gehäusewand des Messgerätegehäuses angeordnet und über Verbindungselemente mit der Auswerteelektronik verbunden. Die Verbindungselemente sind durch das Gehäuse eines separaten Auswertemoduls hindurchgeführt.

Aufgabe der vorliegenden Erfindung ist es daher, die Genauigkeit und die Zuverlässigkeit der kapazitiven Abtastung eines Verbrauchszählers zu verbessern.

Diese Aufgabe wird durch ein erfindungsgemäßes Modul mit den Merkmalen des Anspruchs 1 und einen mit diesem Modul ausgestatteten Verbrauchszähler entsprechend den Merkmalen des Anspruchs 11 gelöst.

Dazu ist vorgesehen, dass die Sensorfläche des Moduls außen an dem Modulgehäuse angeordnet ist. Dies hat den Vorteil, dass die Sensorfläche wesentlich näher an dem die Änderung der kapazitiv detektierbaren Messgröße erzeugenden Verbrauchszähler angeordnet ist, so dass der auftretende Effekt größer ist. Hinzu kommt, dass durch die Anordnung der Sensorfläche außen an dem Modulgehäuse letzteres nicht mehr zwischen den aktiven Kondensatorflächen angeordnet ist und daher die Kondensatorwirkung nicht beeinträchtigt bzw. beeinflusst.

Erfindungsgemäß können zwei (oder mehrere) benachbart angeordnete Sensorflächen außen an dem Modulgehäuse vorgesehen sein, welche die beiden Kondensatorflächen sind, die über die in dem Verbrauchszähler vorgesehene, sich verbrauchsabhängig ändernde Anordnung gemeinsam einen Kondensator mit sich verbrauchsabhängig ändernder Kapazität bilden. Eine derartige Anordnung ist messtechnisch besonders einfach auswertbar, da beide Kondensatorflächen in dem Modul vorgesehen sind und einfach an die Messelektronik angeschlossen werden können. Die in dem Verbrauchserfassungsgerät vorgesehene Anordnung beeinflusst lediglich den Aufbau des resultierenden Kondensators und damit dessen Kapazität.

Ferner ist es besonders vorteilhaft, wenn eine Sensorfläche aus einem elastischen, vorzugsweise auch leitenden Material aufgebaut ist, insbesondere einem leitenden Kunststoff oder einem beispielsweise auch für die LCD-Kontaktierung verwendeten Leitgummi. Ein derartiges Material ist neben seiner Eigenschaft als elektrisch leitende Sensorfläche gleichzeitig geeignet, eine bei einer außen liegenden Sensorfläche notwendige Gehäusedurchkontaktierung gleichzeitig abzudichten, beispielsweise gegen das Eintreten von Feuchtigkeit oder Staub. Dies vereinfacht den Aufbau und die Herstellung des erfindungsgemäßen Moduls, wobei erfindungsgemäß ausgenutzt wird, dass eine bzw. jede Sensorfläche aus einem im Vergleich zu metallischen Materialen schlecht leitenden Material aufgebaut sein darf, bei dem nur kleine Kapazitäten zum Nachweis der Kapazitätsänderung erreicht werden. Derartige kleine Kapazitäten können auch über schlecht leitende Materialien auf- bzw. umgeladen werden. Dadurch ergeben sich weitreichende Freiheiten bei der Materialauswahl.

Insbesondere im Fall eines elastischen leitfähigen Materials können die Sensorfläche und die Durchkontaktierung durch das Modulgehäuse einteilig ausgebildet sein, wobei die elastische Durchkontaktierung beispielsweise mittels einer Hinterschneidung verrastend und eine Gehäuseöffnung für die Durchkontaktierung zu Dichtzwecken vollständig ausfüllend ausgebildet werden kann. Es ist erfindungsgemäß auch möglich, bspw. metallische Sensorflächen und Durchkontaktierungen einteilig auszubilden.

Erfindungsgemäß können die Sensorfläche und eine Durchkontaktierung durch das Modulgehäuse, sowie ggf. eine Kontaktierung an die Messelektronik, aus verschiedenen Materialien aufgebaut sind.

Die Sensorfläche kann beispielsweise auch ein in einem Sieb- oder Tampondruck aufgebrachtes leitfähiges Material aufweisen, welches bspw. auf einem nicht-leitenden elastischen Material oder dem Modulgehäuse vorgesehen wird. Es ist auch möglich, dass für eine Sensorfläche leitfähiges Material insbesondere auf das Modulgehäuse selbst aufgedampft wird. Ferner kann ein metallisches Element, bspw. ein Blech, außen an dem Modulgehäuse festgelegt werden. Dazu kann das metallische Element bspw. bei der Herstellung eines Modulgehäuses aus Kunststoff in einem Spritzgussverfahren unmittelbar eingespritzt sein, so dass das metallische Element (bzw. allgemein die Sensorfläche) in die Gehäusewand des Modulgehäuses integriert ist. Dann ist auch eine gesonderte Abdichtung der Durchkontaktierung nicht notwendig, weil das Gehäuse ohnehin vollständig geschlossen ist. Mit den vorbeschriebenen Anordnungen lassen sich in einfacher Weise reproduzierbare Sensorflächen mit gleichen elektrischen und/oder geometrischen Eigenschaften herstellen. Der Vorteil einer derartigen Sensorfläche liegt in den definierten elektrischen und/oder geometrischen Eigenschaften, welche eine kapazitive Abtastung mit einer einfachen, standardisierten Messelektronik ermöglichen.

Auch bei einer derartigen Sensorfläche ist es sinnvoll, die Durchkontaktierung durch das Modulgehäuse aus einem elastischem, leitfähigem Material auszubilden, das gleichzeitig die Abdichtung des Gehäuses und/oder eine Kontaktierung der Sensorfläche an die Messelektronik ermöglicht. Ein derartiges elastisches Material verschließt die Gehäusekontaktierung gut gegen das Eindringen von Staub und Feuchtigkeit.

Es ist zusätzlich möglich, die Durchkontaktierung durch das Modulgehäuse durch Verkleben oder Einspritzen, d.h. während der Herstellung des Modulgehäuses in einem Spritzgussverfahren, abzudichten. Eine derartige Abdichtung bietet sich auch dann an, wenn Durchkontaktierung aus einem metallischen Material aufgebaut ist. Vorzugsweise kann dann als Durchkontaktierung eine (metallische) Feder oder dgl. elastisches Element verwendet werden.

Das elastische Material ermöglicht gleichzeitig eine federnde Kontaktierung der Sensorfläche an die Messelektronik, so dass deren elektrischer Anschluss mittels eines elastischen, leitfähigen Materials erfolgt. Dann ist der elektrische Anschluss (Kontaktierung) vorzugsweise einteilig mit der Durchkontaktierung (und gegebenenfalls der Sensorfläche selbst) ausgebildet. Für den Anschluss kann die Messelektronik auf einer Platine mit leitfähigen, beispielsweise graphittierten oder vergoldeten, Kontaktflächen ausgebildet sein, welche eine federnde Kontaktierung mit dem elastischen Material des Anschlusses erlauben. Hierzu ist es ausreichend, die Platine mit Anpressdruck gegen die Anschlüsse zu drücken. Dies kann durch eine entsprechende Anordnung der Platine mit der Messelektronik in dem Gehäuse des erfindungsgemäßen Moduls automatisch erfolgen.

Erfindungsgemäß kann das Modul ferner einen Funksender zum Aussenden der durch die Messelektronik aufgenommenen Werte aufweisen, so dass das Modul besonders geeignet ist, um Wasserzähler oder sonstige Verbrauchszähler für eine Fernablesung nachzurüsten.

Entsprechend bezieht sich die vorliegende Erfindung auch auf Verbrauchszähler, insbesondere Wasserzähler, welche eine verbrauchsabhängige Messgröße erzeugen, wobei die Messgröße außen an dem Gehäuse des Verbrauchszähler kapazitiv detektierbar ist. Hierzu ist an dem Gehäuse des Verbrauchszählers ein zuvor beschriebenes Modul zur kapazitiven Abtastung festlegbar. Dabei wird das Modul vorzugsweise derart an dem Verbrauchszäher festgelegt, dass die außen an dem Modulgehäuse angeordneten Sensorflächen durch ein Zusammenwirken des Modulgehäuses und des Gehäuses des Verbrauchszählers abgedichtet sind. Dies kann insbesondere durch das Anbringen einer Dichtung an dem Modulgehäuse und/oder dem Gehäuse des Verbrauchszählers erfolgen, welche um die Sensorfläche(n) herum verläuft. So wird eine bspw. durch Feuchtigkeit oder eingetretenen Schmutz hervorgerufene elektrische Verbindung zwischen zwei benachbart angeordneten Sensorflächen vermieden. Es ist dann auch nicht unbedingt notwendig, die Durchkontaktierung in dem Modulgehäuse abzudichten, obwohl dies auch zusätzlich sinnvoll ist und die Messelektronik bspw. während der Montage schützt.

Um eine möglichst gute kapazitive Abtastung zu ermöglichen, kann bei dem Verbrauchszähler erfindungsgemäß eine verbrauchsabhängig rotierende Scheibe innerhalb des Gehäuses, vorzugsweise unmittelbar benachbart zu der Gehäusewandung, vorgesehen sein, wobei die Scheibe abschnittsweise verschiedene kapazitive Eigenschaften aufweist. Dies kann insbesondere durch eine bereichsweise auf die Scheibe aufgebrachte metallische Beschichtung erreicht werden.

Weitere Merkmale, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: schematisch einen Querschnitt durch ein erfindungsgemäßes Modul zur kapazitiven Abtastung und einen erfindungsgemäßen Verbrauchszähler und
- Fig. 2: schematisch ein Modul zur kapazitiven Abtastung gemäß dem Stand der Technik an einem Verbrauchszähler.

Wie aus Fig. 2 ersichtlich, sind Module 100 zur kapazitiven Abtastung bekannt, in denen jeweils eine als Platine dargestellte Messelektronik 101 vorgesehen ist, auf der mit Kupfer kaschierte Sensorflächen 102, 103 ausgebildet sind, die durch die Wand des Modulgehäuses 104 und die Wand eines Zählergehäuses 105 eines Wasserzählers 106 mit einer rotierenden Scheibe 107 des Wasserzählers 106 gemeinsam einen resultierenden Kondensator bilden.

Dazu ist die rotierende Scheibe 107 auf einer Seite abschnittsweise, beispielsweise zur Hälfte, mit einer metallischen Beschichtung 108 versehen, so dass die beiden Sensorflächen 102 und 103 in dem Modul zwei Kondensatorflächen eines Kondensators bilden, dessen Kapazität davon abhängt, ob sich die metallische Beschichtung 108 der Scheibe 107 über den Sensorflächen 102 und 103 befindet oder nicht. Allerdings sind die rotierende Scheibe 107 und die Sensorflächen 102 und 103 soweit voneinander beabstandet angeordnet, dass die kapazitive Änderung bei der Drehung der rotierenden Scheibe 107 an den Sensorflächen 102, 103 nur schlecht nachweisbar ist.

Um die kapazitive Abtastung zu verbessern, wird erfindungsgemäß ein Modul 1 vorgeschlagen, welches an dem Gehäuse 2 eines zu dem zuvor beschriebenen Wasserzähler 106 vergleichbar aufgebauten Verbrauchszähler 3 angeordnet wird. Der Verbrauchszähler 3, beispielsweise ein Wasserzähler, kann ein nicht dargestelltes Rollenzählwerk und eine rotierende Scheibe 4 aufweisen, die mit dem Getriebe des Rollenzählwerks verbunden ist. Die rotierende Scheibe 4 ist auf einer dem Gehäuse 2 des Verbrauchszählers 3 zugewandten Seite mit einer metallischen Beschichtung 5 versehen, die sich abschnittsweise über die Oberfläche der rotierenden Scheibe 4 erstreckt.

Das Modul 1 weist eine Platine mit Messelektronik 6 auf. Die Platine ist ähnlich wie bei den bekannten Modul 100 in dem Modulgehäuse 7 angeordnet.

Die Sensorflächen 8 und 9 sind jedoch nicht innerhalb des Modulgehäuses 7, sondern auf einer Außenwand des Modulgehäuses 7 angeordnet, welche dem Verbrauchszähler 3 zugewandt ist. Dadurch sind die Sensorflächen 8, 9 näher an der rotierenden Scheibe mit der metallischen Beschichtung 5 angeordnet, so dass der durch die Rotationen der Scheibe 4 hervorgerufene kapazitive Wechsel in dem durch die Sensorflächen 8, 9 und die Scheibe 4 gebildeten Kondensator größer ist und durch die Messelektronik 6 einfacher nachgewiesen werden kann.

Jede Sensorfläche 8, 9 ist mittels einer Durchkontaktierung 10 durch eine Kontaktierungsöffnung 11 in dem Modulgehäuse 7 mit der Messelektronik 6 auf der Platine verbunden.

Zur Verdeutlichung sind in Fig. 1 die Sensorflächen 8, 9 und die Durchkontaktierung 10 als von dem Modulgehäuse 7 und der Kontaktierungsöffnung 11 beabstandet dargestellt. In einer hier beschriebenen Ausführungsform sind die Sensorflächen 8, 9 und die Durchkontaktierung 10 aus einem im Vergleich zu einem metallischen Material schwach leitenden, elastischen leitenden Kunststoff oder Leitgummi aufgebaut und liegen fest auf der Außenseite des Modulgehäuses und abdichtend in der Kontaktierungsöffnung 11 des Modulgehäuses 7 an. Auf diese Weise werden die Sensorflächen 8, 9 an dem Modulgehäuse 7 fixiert und die Kontaktierungsöffnungen 11 gegen den Eintritt von Staub und Feuchtigkeit abgedichtet. Ferner können um die Sensorflächen 8, 9 herum nicht dargestellte Dichtungen vorgesehen sein, welche den Bereich um die Sensorflächen 8, 9 gegen das Gehäuse 2 des Verbrauchszählers 3 und das Modulgehäuse 2 abdichten.

Die Sensorflächen 8, 9, die Durchkontaktierung 10 und deren elektrischer Anschluss 12 (Kontaktierung) an die Platine 6 sind einteilig aus einem elastischen Material, insbesondere einem leitenden Kunststoff oder Leitgummi, aufgebaut, so dass der Anschluss 12 an die Platine durch einfaches Anlegen der Platine 6 mit entsprechenden Kontaktflächen an die Durchkontaktierung 10 bzw. den Anschluss 12 erfolgt. Alternativ ist es auch möglich, die Sensorflächen 8, 9 durch Bedrucken oder Bedampfen ausgewählter Flächen auf dem Modulgehäuse 7 mit einem leitfähigen Material zu erzeugen.

Eine weitere, vorteilhafte Ausführungsform sieht eine Sensorfläche 8, 9 aus einem auf dem Modulgehäuse 7 aufgebrachten Blech vor, wobei die Durchkontaktierung 10 und der elektrische Anschluss bzw. die Kontaktierung 12 an die Platine 6 mittels einer metallischen Feder erfolgt, die zur Abdichtung in das Modulgehäuse 7 eingeklebt oder eingespritzt ist. Alternativ können die Durchkontaktierung 10, der elektrische Anschluss 12 und die Abdichtung auch wie vorbeschrieben durch einen insbesondere einteiligen leitenden Kunststoff oder ein Leitgummi erfolgen, der in Kontakt mit dem als Sensorfläche 8, 9 dienenden Blech steht.

Durch das erfindungsgemäße Modul 1 und den erfindungsgemäßen Verbrauchszähler 3, bei dem die rotierende Scheibe 4 unmittelbar benachbart zu dem Gehäuse 2 des Verbrauchszählers 3 angeordnet ist, wird eine verbesserte kapazitive Abtastung des Verbrauchszählers ermöglicht.

### Bezugszeichenliste:

- 1: Modul
- 2: Gehäuse
- 3: Verbrauchszähler
- 4: rotierende Scheibe
- 5: metallische Beschichtung
- 6: Messelektronik, Platine
- 7: Modulgehäuse
- 8: Sensorfläche
- 9: Sensorfläche
- 10: Durchkontaktierung
- 11: Kontaktierungsöffnung
- 12: elektrischer Anschluss, Kontaktierung

- 100: Modul zur kapazitiven Abtastung
- 101: Messelektronik, Platine
- 102: Sensorfläche
- 103: Sensorfläche
- 104: Modulgehäuse
- 105: Gehäuse
- 106: Wasserzähler
- 107: rotierende Scheibe

## Patentansprüche

1. Modul zur kapazitiven Abtastung eines Verbrauchszählers (3), welcher verbrauchsabhängig eine kapazitiv detektierbare Messgröße verändert, wobei das Modul (1) ein an dem Verbrauchszäher (3) festlegbares Modulgehäuse (7) und eine kapazitive Sensorfläche (8, 9) aufweist, welche mit einer in dem Modulgehäuse (7) aufgenommenen Messelektronik (6) verbunden ist, **dadurch gekennzeichnet, dass** die Sensorfläche (8, 9) außen am dem Modulgehäuse (7) angeordnet ist.

2. Modul nach Anspruch 1, **dadurch gekennzeichnet, dass** mindestens zwei benachbart angeordnete Sensorflächen (8, 9) vorgesehen sind.

3. Modul nach Anspruch 1 oder 2, **dadurch gekennzeichnet, dass** die Sensorfläche (8, 9) aus einem elastischen Material aufgebaut ist.

4. Modul nach einem der vorhergehenden Ansprüche, **dadurch gekennzeichnet, dass** die Sensorfläche (8, 9) und eine Durchkontaktierung (10) durch das Modulgehäuse (7) einteilig ausgebildet sind.

5. Modul nach einem der Ansprüche 1 bis 3, **dadurch gekennzeichnet, dass** die Sensorfläche (8, 9) und eine Durchkontaktierung (10) durch das Modulgehäuse (7) aus verschiedenen Materialien aufgebaut sind.

6. Modul nach einem der vorhergehenden Ansprüche, **dadurch gekennzeichnet, dass** die Sensorfläche (8, 9) ein in einem Sieb- oder Tampondruck aufgebrachtes oder ein aufgedampftes leitfähiges Material oder ein metallisches Element aufweist.

7. Modul nach einem der vorhergehenden Ansprüche, **dadurch gekennzeichnet, dass** eine Durchkontaktierung (10) durch das Modulgehäuse (7) aus einem elastischen, leitfähigen Material ausgebildet ist.

8. Modul nach einem der vorhergehenden Ansprüche, **dadurch gekennzeichnet, dass** eine Durchkontaktierung (10) durch das Modulgehäuse (7) durch Verkleben oder Einspritzen abgedichtet ist.

9. Modul nach einem der vorhergehenden Ansprüche, **dadurch gekennzeichnet, dass** eine Kontaktierung (12) der Sensorfläche (8, 9) an die Messelektronik (6) mittels eines elastischen, leitfähigen Materials erfolgt.

10. Modul nach einem der vorhergehenden Ansprüche, **dadurch gekennzeichnet, dass** das Modul (1) einen Funksender zum Aussenden der durch die Messelektronik (6) aufgenommenen Werte aufweist.

11. Verbrauchszähler, welcher eine verbrauchsabhängig veränderliche, kapazitive Messgröße erzeugt, wobei die Messgröße außen an dem Gehäuse (2) des Verbrauchszählers (3) detektierbar ist, **dadurch gekennzeichnet, dass** an dem Gehäuse (2) des Verbrauchszählers (3) ein Modul (1) zur kapazitiven Abtastung gemäß einem der Ansprüche 1 bis 10 festgelegt ist.

12. Verbrauchszähler nach Anspruch 11, **dadurch gekennzeichnet, dass** eine verbrauchsabhängig rotierende Scheibe (4) innerhalb des Gehäuses (2) vorgesehen ist, welche abschnittsweise verschiedene kapazitive Eigenschaften aufweist.

## Claims

1. Module for the capacitive sensing of a usage counter (3), which modifies a capacitively detectable measurement variable according to usage, wherein the module (1) has a module housing (7) that can be fixed to the usage counter (3) and a capacitive sensor surface (8, 9), which is connected to a set of measurement electronics (6) accommodated in the module housing (7), **characterized in that** the sensor surface (8, 9) is arranged on the outside of the module housing (7).

2. Module according to Claim 1, **characterized in that** at least two adjacently positioned sensor surfaces (8, 9) are provided.

3. Module according to Claim 1 or 2, **characterized in that** the sensor surface (8, 9) is constructed from an elastic material.

4. Module according to any one of the preceding claims, **characterized in that** the sensor surface (8, 9) and a feed-through contact (10) through the module housing (7) are constructed as a single piece.

5. Module according to any one of Claims 1 to 3, **characterized in that** the sensor surface (8, 9) and a feed-through contact (10) through the module housing (7) are composed of different materials.

6. Module according to any one of the preceding claims, **characterized in that** the sensor surface (8, 9) has a conductive material, applied by screen-printing or pad printing or vapour deposition, or a metallic element.

7. Module according to any one of the preceding claims, **characterized in that** a feed-through contact (10) through the module housing (7) is constructed from an elastic, conductive material.

8. Module according to any one of the preceding claims, **characterized in that** a feed-through contact (10) through the module housing (7) is sealed by gluing or injection.

9. Module according to any one of the preceding claims, **characterized in that** contact (12) is made from the sensor surface (8, 9) to the measuring electronics (6) by means of a flexible, conductive material.

10. Module according to any one of the preceding claims, **characterized in that** the module (1) has a radio transmitter for transmitting the values recorded by the measurement electronics (6).

11. Usage meter which generates a capacitive measurement variable that varies according to usage, wherein the measurement variable can be detected on the outside of the housing (2) of the usage counter (3), **characterized in that** a module (1) for capacitive sensing according to any one of Claims 1 to 10 is fixed to the housing (2) of the usage counter (3).

12. Usage counter according to Claim 11, **characterized in that** a disc (4) is provided inside the housing (2), that rotates according to usage and has different capacitive properties in some sections.

## Revendications

1. Module pour le balayage capacitif d'un compteur de consommation (3), lequel modifie une grandeur de mesure détectable de manière capacitive en fonction de la consommation, le module (1) présentant un boîtier de module (7) pouvant être fixé sur le compteur de consommation (3) et une surface de capteur capacitive (8, 9), laquelle est en liaison avec une électronique de mesure (6) logée dans le boîtier de module (7), **caractérisé en ce que** la surface de capteur (8, 9) est disposée à l'extérieur sur le boîtier de module (7).

2. Module selon la revendication 1, **caractérisé en ce que** l'on prévoit au moins deux surfaces de capteur (8, 9) disposées de manière adjacente.

3. Module selon la revendication 1 ou 2, **caractérisé en ce que** la surface de capteur (8, 9) est réalisée en un matériau élastique.

4. Module selon l'une des revendications précédentes, **caractérisé en ce que** la surface de capteur (8, 9) et une mise en contact traversante (10) à travers le boîtier de module (7) sont formées d'un seul tenant.

5. Module selon l'une des revendications 1 à 3, **caractérisé en ce que** la surface de capteur (8, 9) et une mise en contact traversante (10) à travers le boîtier de module (7) sont réalisées avec des matériaux différents.

6. Module selon l'une des revendications précédentes, **caractérisé en ce que** la surface de capteur (8, 9) présente un matériau conducteur ou un élément métallique appliqué par sérigraphie ou impression par tampon ou métallisé sous vide.

7. Module selon l'une des revendications précédentes, **caractérisé en ce qu'**une mise en contact traversante (10) à travers le boîtier de module (7) est réalisée en un matériau conducteur élastique.

8. Module selon l'une des revendications précédentes, **caractérisé en ce qu'**une mise en contact traversante (10) à travers le boîtier de module (7) est étanchéifiée par collage ou injection.

9. Module selon l'une des revendications précédentes, **caractérisé en ce qu'**une mise en contact (12) de la surface de capteur (8, 9) avec l'électronique de mesure (6) s'effectue à l'aide d'un matériau conducteur élastique.

10. Module selon l'une des revendications précédentes, **caractérisé en ce que** le module (1) présente un émetteur radio pour envoyer les valeurs enregistrées par l'électronique de mesure (6).

11. Compteur de consommation, lequel génère une grandeur de mesure capacitive variable en fonction de la consommation, la grandeur de mesure pouvant être détectée à l'extérieur sur le boîtier (2) du compteur de consommation (3), **caractérisé en ce qu'**un module (1) pour le balayage capacitif selon l'une des revendications 1 à 10 est fixé sur le boîtier (2) du compteur de consommation (3).

12. Compteur de consommation selon la revendication 11, **caractérisé en ce qu'**un disque (4) en rotation en fonction de la consommation est prévu à l'intérieur du boîtier (2), lequel présente différentes propriétés capacitives par segments.
